# EUROPEAN PATENT SPECIFICATION

(11) **EP 4 030 136 B1**
(45) Date of publication and mention of the grant of the patent: **10.07.2024**
(21) Application number: 21386003.4
(22) Date of filing: 19.01.2021
(51) Int. Cl.: G01B 11/24, B66B 5/00, G01B 5/00

(54) **SYSTEM FOR MEASURING THE DIMENSIONS OF AN ELEVATOR SHAFT**
SYSTEM ZUR MESSUNG DER ABMESSUNGEN EINER AUFZUGSSCHACHT
SYSTÈME POUR LA MESURE DES DIMENSIONS D'UNE CAGE D'ASCENCEUR

(43) Date of publication of application: 20.07.2022
(73) Proprietor: Kleemann Hellas SA, 61100 Kilkis (GR)
(72) Inventor: Georgiadis, Georgios, 55135 Thessaloniki (GR)
(74) Representative: Natsiou, Konstantia

(56) References cited:
- WO-A1-2019/206625
- CN-A- 110 966 923
- JP-B1- 4 411 371
- US-A1- 2019 177 120

## Description

Present invention refers to an integrated system for recording the dimensions of the shaft electronically. The dimensions and all required details from a shaft are recorded through a 3D scanning or scannerless measurement apparatus, such as CMM or Laser scanner or time of flight scannerless apparatus, which is placed on a guide that is able to slide through a vertical element. The vertical element is mounted in such way that cannot deviate from theoretical vertical axis and is attached on a frame. The above-mentioned frame is placed on the door opening on any floor. Following are described further details about the invention.

According to the statistical committee of European Lift Association, almost 100,000 lifts were installed in 2019 in Europe, so that the existing lifts are more than 6,000,000. In the meantime, in China is estimated that in 2019 more than 600,000 new installations took place.

According to the state of the art, temporary platforms are arranged in order to assist the installers even before the installation starts, since firstly the shaft has to be accurately get measured. The dimensions, and perhaps special details such as surface deforms, of the shaft are recorded through conventional methods, such as measuring tape and plump lines.

The main drawback of this method is that each shaft is described by different specifications. It is crucial knowing not only the dimensions of the shaft, but also specific features such as abnormalities on the walls. It is common the walls of the shaft not being perfect vertical levels, through the whole height. Unfortunately, the architectural designs are not able to reflect the imperfections of a construction. Moreover, there are cases that the relevant distance of the door opening and the opposite wall is not the same between the different floors of the building, this situation causes several issues while installing the elevator.

Inventions that scan the inside of an elevator shaft with laser light or camera to measure the dimensions of each part in the shaft have been proposed, for example, see Patent Documents JP 4411371B, WO2018/041815A1 and WO 2019/206625A1.

However, each of them presents several drawbacks. For example, the first one mentioned (JP 4411371B) suits in cases that the elevator is already installed and the cabin is used in order to arrange the recording device on it and then record several items in the shaft. On the other hand, the second one (WO2018/041815A1) demands a displacement device in the form of a winch, which means that the worker should enter prior on the shaft somehow in order to penetrate the winch on the roof. Finally, WO 2019/206625A1 uses the recording devices, in that case two cameras, in order to determine the current position of a lift system and not for recording shaft's dimensions.

The presented invention is an integrated system for recording the dimensions of the shaft electronically. The first part of the presented invention concerns the attachment frame and aims on securing that the vertical element guide will not deviate from the theoretical vertical axis. The scope of the second part, of using the CMM or an optical apparatus, is presenting an easy way of recording precisely the shaft, so the afterwards installation demands less effort.

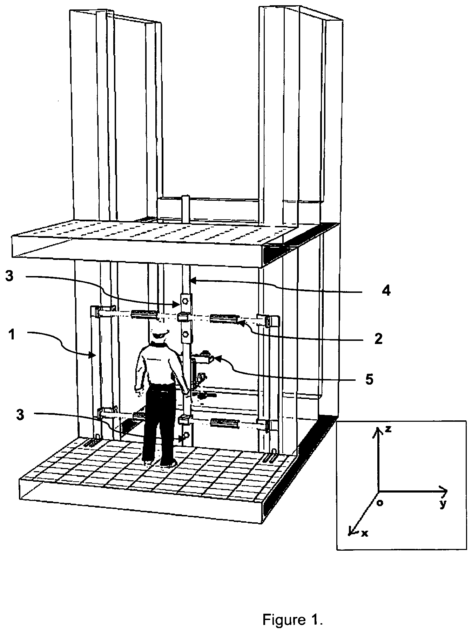

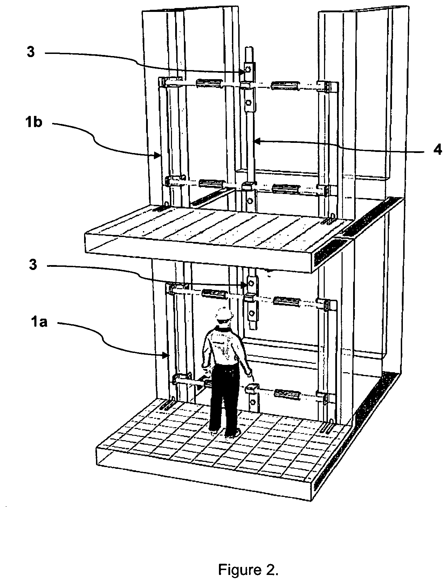

In Figure 1 is presenting the construction that is used. In detail, the frame (1) can be placed initially either on top or bottom floor and 2 pieces of frame (1), namely 1a and 1b, are enough for performing the measurement. The frames will be placed in consecutive floors and progress in the following way:
**Step 1**
   Frame 1a at floor 1
   Frame 1b at floor 2
**Step 2**
   Frame 1a at floor 3
   Frame 1b at floor 2
**Step 3**
   Frame 1b at floor 4
   Frame 1a at floor 3
   etc.

The telescopic bars (2) ensure the stability of the construction regardless the width of the door opening, since they are regulated to several widths, the telescopic bars (2) are fastened via friction. Moreover, the frame protects from an unintentional enter in the shaft. The guide (4) will always be engaged with at least 2 supports (3) and during the transition from one step to another (consecutive floors) temporarily will be engaged with 3 supports. By this action, deviation from theoretical Z axis will be avoided.

The required guide should only have the length of the door opening, since it can be moved from a level to another level (floors). The measurement apparatus (5) is placed on the guide. A second frame is then placed on the next floor and the guide (4) coupled with the recording apparatus (5) slides through the supports (3). The first frame can be uninstalled and get re-installed on the third floor, and so on until the whole shaft is scanned.

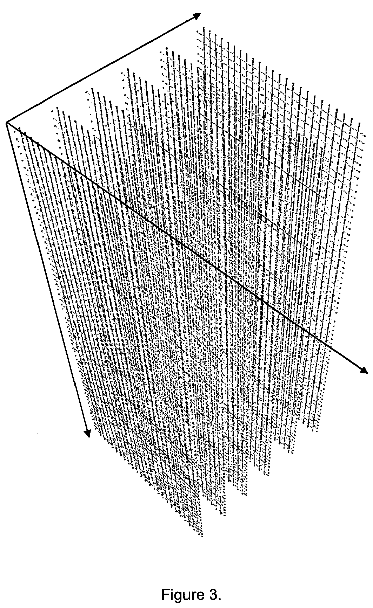

The collected data from the recording apparatus (5) can be transferred to a processing system so the (x, y, z) dimensions may be translated into data points on the 3D space. In Figure 3 is presented a 3D imaging of a shaft.

## Claims

1. Electronic shaft dimensioning system being a system for electronically recording the dimensions of a lift shaft comprising:
- two pieces of frame (1a, 1b) adapted to be placed in consecutive floors, each frame comprising two telescopic bars (2) with supports (3), each of said telescopic bars being adapted to be placed across the width of any floor door opening;
- a guide (4) engaged with the at least two supports (3), wherein the guide (4) is adapted to be temporarily engaged with three supports of two separate pieces of frame during the transition from the one floor to the next floor, so as to avoid any deviation from theoretical vertical axis;
- a measuring apparatus (5), as 3D scanning or scannerless measurement apparatus, such as CMM or Laser scanner or time of flight scannerless apparatus, which is placed on said guide (4), wherein the guide (4) coupled with the measuring apparatus (5) is adapted to slide through the supports (3) from the one floor to the next floor; And a processing system adapted to receive the data from the measuring apparatus (5) measured at successive floors in order to obtain data points of the whole shaft in the 3D space.

2. The system according to Claim 1, wherein the guide (4) is used in order to assure the stability of the vertical z coordinate.

3. The system according to Claim 1-2, wherein the required guide (4) only has the length of the door opening.

4. The system according to Claim 1-3, wherein the recorded data are manipulated in a way that a 3D imaging of the whole shaft can be achieved.

5. The system according to Claim 1-4, wherein the frame (1a, 1b) is configured to be easily adjusted to any door opening.

6. The system according to Claim 1-5, wherein measuring tapes and plumb lines are not needed.

7. The system according to Claim 1-6, wherein the measuring apparatus is configured to scan the shaft during descend movement by moving on the guides from top to bottom.

## Patentansprüche

1. Elektronisches Schachtvermessungssystem, ein System zur elektronischen Erfassung de Abmessungen eines Aufzugsschachts, bestehend aus:
- zwei Rahmenteile (1a, 1b), die in aufeinanderfolgenden Stockwerken platziert werden können, wobei jeder Rahmen zwei Teleskopstangen (2) mit Stützen (3) umfasst, wobei jede der Teleskopstangen so angepasst ist, dass sie über die Breite jeder Schachttüröffnung platziert werden kann ;
- eine Führung (4), die mit den mindestens zwei Stützen (3) in Eingriff steht, wobei die Führung (4) dazu ausgelegt ist, während des Übergangs von der einen Etage zur nächsten Etage vorübergehend mit drei Stützen von zwei separaten Rahmenstücken in Eingriff zu stehen, so um jegliche Abweichung von der theoretischen vertikalen Achse zu vermeiden;
- ein Messgerät (5), als 3D-Scanner oder scannerloses Messgerät, wie etwa ein KMG oder ein Laserscanner oder ein scannerloses Flugzeitgerät, das auf der Führung (4) platziert ist, wobei die Führung (4) gekoppelt mit dem Messgerät ( 5) durch die Stützen (3) von einem Stockwerk zum nächsten gleiten kann; Und ein Verarbeitungssystem, das dazu geeignet ist, die Daten von der Messvorrichtung (5) zu empfangen, die auf aufeinanderfolgenden Stockwerken gemessen wurden, um Datenpunkte des gesamten Schachts im 3D-Raum zu erhalten.

2. System nach Anspruch 1, wobei die Führung (4) verwendet wird, um die Stabilität der vertikalen Z-Koordinate sicherzustellen.

3. System nach Anspruch 1-2, wobei die erforderliche Führung (4) nur die Länge der Türöffnung hat.

4. System nach Anspruch 1-3, wobei die aufgezeichneten Daten so manipuliert werden, dass eine 3D-Abbildung des gesamten Schachts erreicht werden kann.

5. System nach Anspruch 1-4, wobei der Rahmen (1a, 1b) so konfiguriert ist, dass er sich leicht an jede Türöffnung anpassen lässt.

6. System nach Anspruch 1-5, wobei Maßbänder und Lotlinien nicht erforderlich sind.

7. System nach Anspruch 1-6, wobei die Messvorrichtung so konfiguriert ist, dass sie den Schacht während der Abstiegsbewegung abtastet, indem sie sich auf den Führungen von oben nach unten bewegt.

## Revendications

1. Système électronique de dimensionnement d'une gaine d'ascenseur étant un système pour enregistrer électroniquement les dimensions d'une gaine d'ascenseur comprenant :
- deux sections de cadre (1a, 1b) adaptés pour être placés dans des étages consécutifs, chaque cadre comprenant deux barres télescopiques (2) avec des supports (3), chacune desdites barres télescopiques étant adaptée pour être placée sur la largeur de n'importe quelle ouverture de porte palière ;
- un guide (4) en prise avec les au moins deux supports (3), le guide (4) étant adapté pour être temporairement en prise avec trois supports de deux sections de cadre distinctes pendant la transition d'un étage à l'étage suivant, de sorte afin d'éviter tout écart par rapport à l'axe vertical théorique ;
- un appareil de mesure (5), tel qu'un appareil de mesure à balayage 3D ou sans scanner, tel qu'une MMT ou un scanner laser ou un appareil sans scanner de temps de vol, qui est placé sur ledit guide (4), le guide (4) couplé à l'appareil de mesure ( 5) est adapté pour glisser à travers les supports (3) d'un étage à l'étage suivant ; Et un système de traitement adapté pour recevoir les données de l'appareil de mesure (5) mesurées à des étages successifs afin d'obtenir des points de données de l'ensemble de la gaine dans l'espace 3D.

2. Système selon la revendication 1, dans lequel le guide (4) est utilisé afin d'assurer la stabilité de la coordonnée verticale z.

3. Système selon les revendications 1 et 2, dans lequel le guide requis (4) dispose seulement de la longueur de l'ouverture de la porte.

4. Système selon les revendications 1 à 3, dans lequel les données enregistrées sont manipulées de manière à permettre d'obtenir une imagerie 3D de l'ensemble de la gaine.

5. Système selon les revendications 1 à 4, dans lequel le cadre (1a, 1b) est configuré pour être facilement ajusté à n'importe quelle ouverture de porte.

6. Système selon les revendications 1 à 5, dans lequel des rubans à mesurer et des fils à plomb ne sont pas nécessaires.

7. Système selon les revendications 1 à 6, dans lequel l'appareil de mesure est configuré pour balayer la gaine pendant un mouvement descendant en se déplaçant sur les guides de haut en bas.
